**Europäisches Patentamt**

**European Patent Office**

**Office européen des brevets**

(19)

(11) Publication number : **0 197 077**
**B1**

(12)

# EUROPEAN PATENT SPECIFICATION

(45) Date of publication of patent specification :
30.11.88

(51) Int. Cl.⁴ : **G 01 D 11/24, G 12 B 9/00**

(21) Application number : **85904820.9**

(22) Date of filing : **26.09.85**

(86) International application number :
**PCT/FI 85/00080**

(87) International publication number :
**WO/8602442 (24.04.86 Gazette 86/09)**

(54) CONNECTION DEVICE FOR MEASURING INSTRUMENTS.

(30) Priority : **11.10.84 FI 843985**

(43) Date of publication of application :
**15.10.86 Bulletin 86/42**

(45) Publication of the grant of the patent :
**30.11.88 Bulletin 88/48**

(84) Designated contracting states :
**AT BE CH DE FR GB IT LI NL SE**

(56) References cited :
**CH-A- 521 657**

(73) Proprietor : **VALMET OY**
**Instrumenttitehdas P.O. Box 237**
**SF-33800 Tampere (FI)**

(72) Inventor : **MÄKINEN, Veikko**
**Kuoppamäentie 31 B 10**
**SF-33800 Tampere (FI)**

(74) Representative : **Smulders, Theodorus A.H.J. et al**
**Vereenigde Octrooibureaux Nieuwe Parklaan 107**
**NL-2587 BP 's-Gravenhage (NL)**

## Description

The invention relates to a connecting device for measuring instruments including a body attached to a boundary surface of a process, the body comprising an aperture or a like in connection with the process through which aperture a process is measured by a measuring instrument affixed to the connecting device.

Several kinds of measurements are carried out today in the process industry. These measurements require the direct or indirect connection of the measuring instrument such as the sensor, pressure mediator or the like with the process substance. The measuring instrument can be brought into contact with the process substance in several ways. The most simple way for mounting e. g. a sensor in its place is to attach by welding a sleevelike body of the connecting device to the boundary surface of the process, e. g. to the outer surface of a tube. The sleevelike body is most suitably provided with an internal threading or a fixing flange and the boundary surface of the process is provided with an aperture at the body. The sensor is fitted through the sleevelike body into contact with the process substance and it is secured thereto e. g. by means of external threading. The sensor is thus directly connected with the process. Further connecting devices known in the art include such devices, which are connected with the process so that a shut-off valve is disposed between the body of the connecting device and the process. By means of this valve the contact between the process substance and the connecting device can be shut off when necessary. This kind of an arrangement for connecting device for measuring instruments is disclosed in the CH-patent publication 521,657. The sensor in the connecting device is movable in its longitudinal direction. For starting the measurement the shut-off valve must at first be opened and after that the sensor is moved in its longitudinal direction through the hole of the shut-off valve to its front position into contact with the process. In a corresponding way, when finishing the measurement the sensor must be moved in its longitudinal direction out of the hole of the valve to its back position and the valve is to be closed.

The connecting device connected directly with the process and having the sensor attached to its body, which in turn is fixed to the boundary surface of the process has the disadvantage, that the replacement or maintenance of the measuring instrument cannot be carried out without disturbing the process itself. Before the actual replacement or maintenance work of the sensor can be started, the process must be interrupted at least in the vicinity of the connecting device. The connecting device equipped with a shut-off valve has the disadvantage, that a relatively great amount of assembly parts is needed. In the first event, a fixing member attached to the boundary surface of the process is needed. The valve is affixed to this fixing member. The actual connecting device, which engages the sensor is attached to the valve. The use of this measuring arrangement is labourious, because the sensor and the shut-off valve must be moved separately for accomplishing the connection between the sensor and the process substance or for cutting off the connection. Moreover, because the shut-off valve always must be located in a relatively great distance from the process, the connecting duct between the process substance and the shut-off valve can become clogged, if the process substance to be measured easily forms precipitates. In any case the sensor must displace the process substance entering into said connecting channel and eventually also into the shut-off valve and this may involve great difficulties, when the sensor is connected with the process substance after the shut-off period, in particular when high-pressure processes are measured.

The object of this invention is to provide a connecting device for measuring instruments, which overcomes the abovementioned problems. The object of this invention is thus to provide a simple and reliable connecting device for measuring instruments, which can be closed for the replacement and maintenance of the sensor in such a way, that the process itself is not disturbed.

For achieving these purposes the connecting device according to the invention and including the features referred to in the preamble of present Claim 1 is characterized in that the measuring instrument is affixed to a selector member mounted movably relative to the body, that the selector member has a hole or the like in connection with the measuring instrument, which hole is in connection with the aperture of the body in the measuring position of the connecting device and that the selector member has a closing surface or the like being at the aperture of the body in the closed position of the connecting device.

The accompanying subclaims present other advantageous characteristic features of embodiments of the invention.

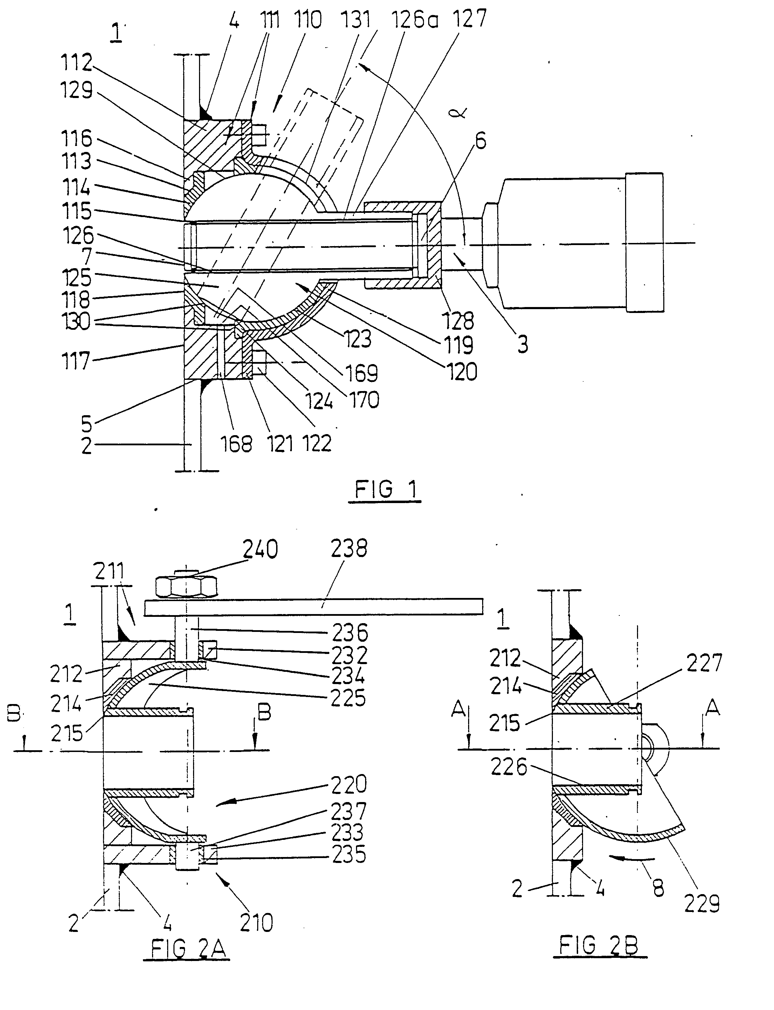

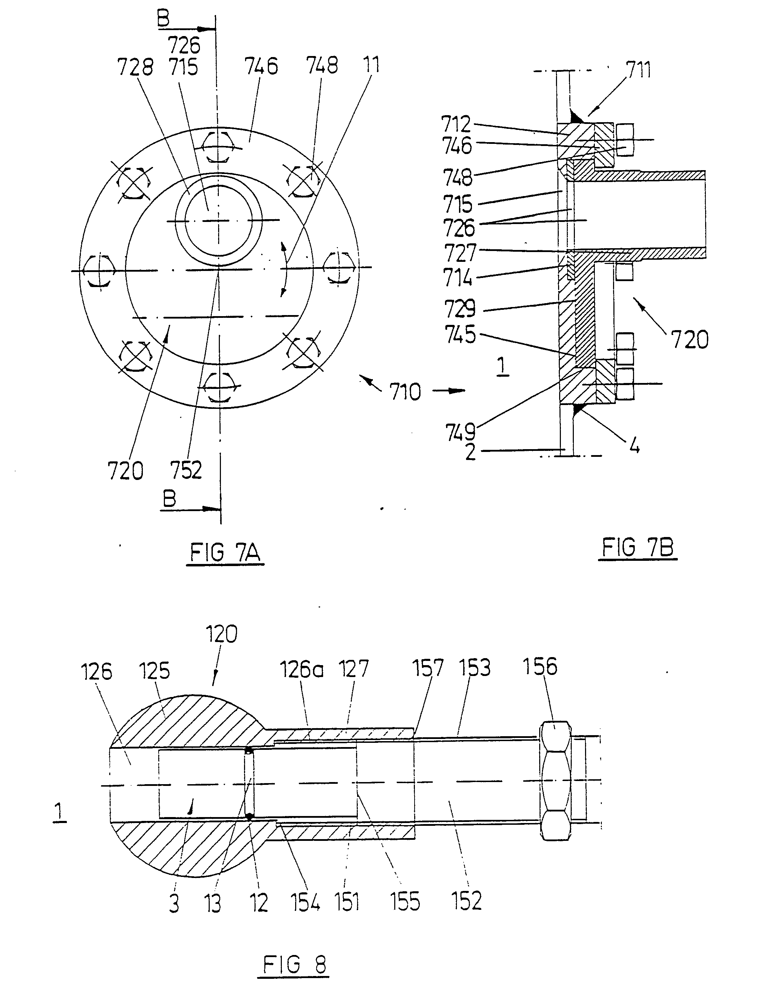

Some embodiments of the invention will now be described with reference to the accompanying drawings which show some preferred embodiments of the invention. In the drawings, Figures 1 to 7 show different embodiments of the connecting device according to the invention and Figures 8 to 10 show some embodiments of the attachement between the selector member and the measuring instrument employed to bring the measuring instrument into the process substance. As far as the reference numerals with three digits are concerned, the following system is applied. The first number refers to the number of the Figure in question and the following number with two digits refers to the actual part of the connecting device. Thus parts with similarities in function form a series of reference numerals; which differ from each other as far as indicating the number of Figure in question is concerned.

Fig. 1 is a sectional view of a first embodiment of the connecting device. The process and process substance is generally denoted by reference numeral 1, the properties of which such as the temperature, the density, the pH-value, the consistency or some other characteristic are measured. The process substance is limited by the boundary surface 2 of the process, which surface in this context can indicate e. g. a wall of the container around the process substance, a tube with the process substance flowing therein or a flange in connection with the container or a tubing containing the process substance. The measuring instrument is denoted by reference numeral 3 and in this case it is a sensor, but it can be also a pressure mediator or a corresponding member in connection with the process substance and measuring one or several of the characteristics of the process substance. The measurement as such and the information given by the measuring instrument about the characteristics of the process substance and transferring this information are not included in the scope of this invention. Thus, these characteristics are not described in more detail. It is only emphasized the fact that the connecting device according to the invention can always be designed in accordance with the basic idea of the invention so that the measuring instruments available on the market can be disposed in the connecting device.

The connecting device 110 for measuring instruments in accordance with the invention is attached to the boundary surface 2 of the process. In the case shown in Fig. 1 a body 111 of the connecting device is welded at 4 to the aperture 5 in the boundary surface of the process in such a manner, that the inner surface of the body is on the same level with the inner surface of the boundary surface 2 of the process. The body 111 comprises preferably a base portion 112 of annular shape, the welded joint 4 being between the peripheral surface of this base portion and the edge of the aperture 5. The base portion comprises an aperture 113 with a gasket 114 disposed therein, this gasket comprising further an aperture 115, through which the sensor 3 is in connection with the process substance. The gasket 114 can be made from plastic material, e. g. Teflon®, which is a sealing material of great chemical and mechanical resistance. The gasket 114 is at its outer edge supported by a flange 116 in the base portion 112 to prevent the gasket 114 from moving in a longitudinal direction of the sensor. The sealing flange 116 as well as the gasket 114 are preferably of circular shape as viewed in the longitudinal direction of the sensor. The surface 117 of the base portion directed towards the process as well as the surface 118 of the gasket 114 directed in the same direction are substantially on the same level with the inner surface of the boundary surface 2 of the process.

A selector member 120 according to the invention is fixed to the body 111 by means of a closure 119, which is secured to the base portion 112 with bolts 122 at an annular flange 121.

Another gasket 123 is disposed between the closure 119 and the selector member 120 and it is held against movement relative to the closure by means of a collar 124 between the base portion 112 and the closure 119. The gasket is preferably made of Teflon®. The closure 119 can be made e. g. from platelike metallic material by deep drawing. The base portion 112 can preferably be made from stainless steel, which is machined to annular shape comprising the sealing flange 116, the necessary space for the selector member as well as the recess for the collar 124 of the gasket 123.

In the embodiment shown in Fig. 1 the selector member 120 comprises a measuring and closing portion 125 located substantially inside the body 111 and comprising a centrally positioned hole 126 for the sensor 3. The selector member 120 further comprises a sleeve portion 127 arranged centrally of the central axis of the hole 126. The sensor is partly located in this sleeve, which is used when fixing the sensor to the selector member 120 e. g. by means of a barrel nut 128. The barrel nut 128 comprises an internal threading and the sleeve 127 of the selector member 120 has a corresponding external threading. The barrel nut 128 serves in locking a flange 6 in the sensor 3 between the end surface of the sleeve 127 of the selector member and the bottom of the barrel nut 128.

The measuring and closing portion 125 has the shape of a sphere and the shape of the inner surface of the gaskets 114 and 123 corresponds essentially with the shape of the portion 125. A sealing effect is thus accomplished between the portion 125 and the parts 114 and 123 within a housing 130 of the body 111, this housing being essentially defined by the inner surfaces of the gaskets.

In the position shown by solid lines in Fig. 1 the process is measured by the sensor 3. In this position the sensor 3 located in the hole 126 of the selector member 120 and particularly the end surface 7 thereof is at the aperture 115 of the body 111, the sensor being thus in connection with the process. In accordance with the invention the selector member 120 is fitted movably relative to the body 111 so that the selector member 120 and particularly the measuring and closing portion 125 is rotatable within the housing 130 of the body 111, which housing is essentially limited by the gaskets 114 and 123. The closed position of the portion 125 is shown in Fig. 1 by interrupted lines. In this position the spherical outer surface 129 of the portion 125 is positioned at the aperture 115 of the body 111. The connecting device is now in the closed position and the sensor can be checked or detached for maintenance work or replacement from the connecting device by loosening the barrel nut 128. For allowing the rotatory movement, the closure 119 of the body 111 as well as the spherical gasket 123 are provided with slots 131 in coincidence with each other, the width of the said slots 131 corresponding substantially to the diameter of the sleeve portion 127. The rotary movement between the closed and measuring positions, shown by an angle α in Fig. 1, can be carried out in the direction of these slots. A part of the outer surface 129 of the spherical measuring and closing portion 125 acts thus as a closing surface. The entire outer surface, however, acts as a guide for the movement within the housing 130 of the body 111. The slots 131 in the closure 119 and in the gasket 123 are preferably disposed in horizontal position when mounting the connecting device 110. In this case the external disturbing factors such as vibration cannot change the position of the selector member. The embodiment shown in Fig. 1 can naturally be provided also with a locking device which prevents the accidental changes of position of the selector member 120.

The selector member 120 in Fig. 1 can be manufactured e. g. from stainless steel by turning a spherical part 125, which is provided with a bore 126 extending therethrough. The sleeve portion 127 can be subsequently mounted e. g. threadably in this spherical part so that the hole 126a of the sleeve portion is located centrally of the hole 126 of the part 125 and is also of equal diameter. Another alternative for making the selector member 120 of the Fig. 1 is to shape the part 125 from plastic material e. g. by injection moulding in a spherical hollow mold, wherein a metal tube of substantially greater length than the diameter of the spherical part is disposed. In that case the portion of the tube extending outwardly of the spherical part makes up the sleeve 127. The portion of the tube remaining within the spherical part can comprise flanges or the like organs extending outwardly from the outer surface of the tube for the purpose of improving the attachement between the tube and the plastic material.

Further in Fig. 1 the base portion 112 of the body 111 is provided with a bore denoted at 168. This bore 168 connects the housing 130 of the body 111 with the outer surface of the body 111. Through the bore 168 the condition of the sensor 3 can be inspected, when the sensor is in the position shown by interrupted lines in Fig. 1 and the end 7 of the sensor 3 is in connection with the space 169 within the housing 130 between gaskets 114 and 123. The inner end 170 or the bore is in connection with the space 169. In this case ordinary measurements are not carried out with the sensor 3 and the closing surface 129 of the selector member 120 is at the aperture 115 of the body closing thus the connecting device. The inspection device can be connected to the outer end of the bore 168 by suitable means. When the bore is not used for inspections described above it can be closed.

Figs. 2a and 2b show another embodiment of the connecting device according to the invention, without a measuring instrument disposed therein. Fig. 2a is a sectional view as taken on line A-A of Fig. 2b and Fig. 2b is a sectional view as taken on line B-B of Fig. 2a. The body 211 comprises a base portion 212 and a gasket 214 with an aperture 215 positioned centrally thereof. In this embodiment the opposite sides of the base portion 212 of the body 211 are provided with supporting brackets 232 and 233 extending outwardly of the boundary surface of the process. Pivots 236 and 237 are journaled in bearings 234 and 235 supported by the brackets. The measuring and closing portion 225 of the selector member is mounted between these pivots and is thus pivotable about an axis of rotation 240 between the pivots. Further to the pivot 236 is affixed a lever 238 for bringing the connecting device 210 from the position shown in Figs. 2a and 2b, wherein the hole 226 of the sleeve 227 for fixing the measuring instrument and included in the selector member 220 is at the aperture 215 of the body 211, into the closed position by rotating it in the direction of arrow 8. In the closed position the closing surface 229 of the selector member 220 on the side of the sleeve 227, as viewed in the direction of the axis of rotation, is at the aperture 215 of the body 211.

In this embodiment the selector member 220 has the shape of a shell structure. The outer surface of this structure is a surface of sphere or revolution, at least the portion contacting the gasket 214. The shell structure shown in figures can be made e. g. of from platelike metallic material by deep drawing and by providing it with a hole, whereon the sleeve 227 for fixing the sensor is mounted. It is preferable to dispose the fixing sleeve 227 near by the other edge of the measuring and closing portion 225, as viewed in the direction of the axis of rotation 240. In this case the length of the closing surface is sufficient even if the length of the periphery of the selector member 220 is a semicircle, as viewed in the direction of the axis of rotation.

The fixing sleeve 227 may be provided with a fixing arrangement according to Fig. 1 for mounting the measuring instrument 3. Moreover, the outer end of the fixing sleeve can be equipped with a flange element extending outwardly thereof and used in attaching the locking flange 6 of the sensor. Further, as shown in Figs. 2a and 2b, the outer surface of the sleeve may be surrounded by a mounting groove, wherein is fixed a two-sided fixing ring having a cross section of an inwardly directed V and fastening at its first leg to the groove and at its second leg to a correspondingly shaped groove in the sensor.

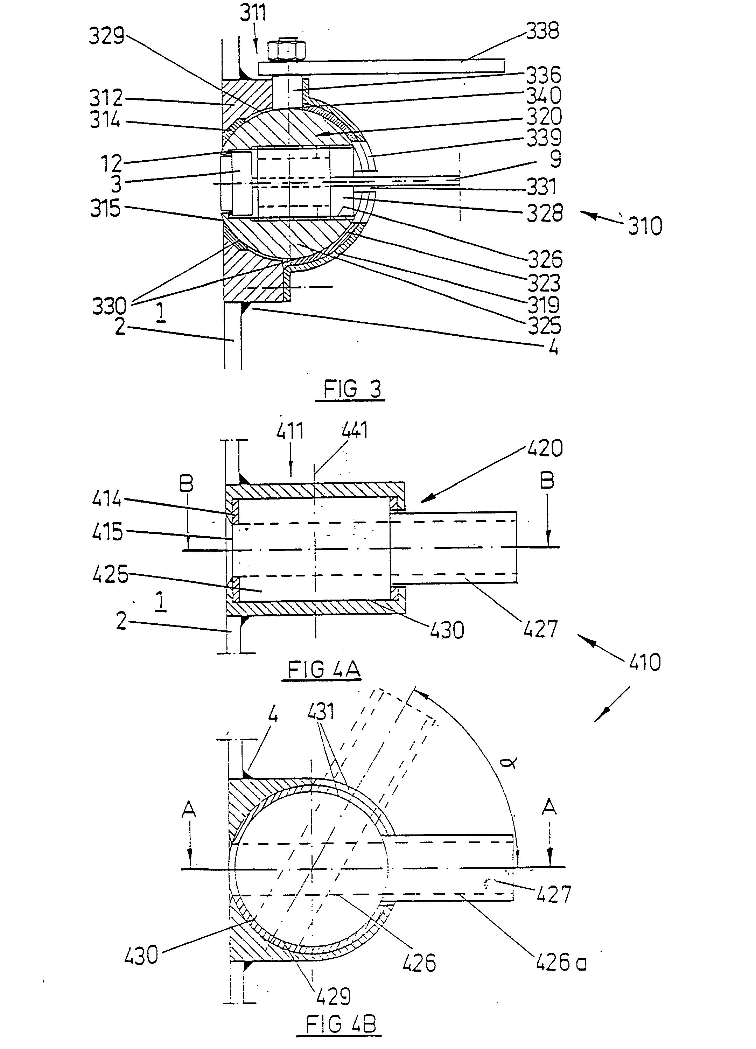

Fig. 3 shows a third embodiment of the connecting device according to the invention as a sectional view. This embodiment combines the features of aforementioned embodiments by having a selector member 320 of a mainly spherical shape and therein a central hole 326 for engaging the measuring instrument 3. The embodiment shown in Fig. 3 is well suitable for measuring instruments of smaller size. Such instruments include e. g. a pressure mediator 3 shown in the Figure. This instrument mediates along a capillary tube 9 a measuring signal corresponding to the pressure of the process. The measuring instrument 3 is fastened to the hole 326 of the measuring and closing portion 325 of the selector member 320 with fixing nut 328. The nut 328 comprises an external threading, which fits within an internal threading of the hole 326. The closure 319 as well as the gasket 323 are provided with an aperture 339 for mounting in the measuring instrument 3 and the fixing nut 328 and further with a slot 331 for rotating the connecting device by means of a lever 338. The lever is affixed to a pivot 336 journaled in the body 311 and extending therethrough. The pivot is in turn affixed to the portion 325. By pivoting the lever 338 in a plane perpendicular to the Figure, the closing surface of the selector member (a portion of the outer surface 329 of the spherical selector member) located behind the sensor as viewed in the direction of Fig. 3, assumes a position wherein it is at the aperture 315 of the body 311. The axis of rotation 340 of the selector member coincides thus with the central axis of the pivot 336.

The Figs. 4a and 4b show a fourth embodiment of the connecting device according to the invention without a measuring instrument. Fig 4a is a sectional view as taken on line A-A of Fig. 4b and Fig. 4b is in turn a sectional view as taken on the line B-B of Fig. 4a. This embodiment is a modification of the embodiment in Fig. 1. The surface 429 of the measuring and closing portion 425 of the selector member 420 has the shape of a cylinder. The body 411 and especially the housing 430 thereof, wherein the portion 425 is rotatable between the measuring and closed positions, is likewise a cylinder. Between the portion 425 and the housing 430 of the body 411 is a gasket 414 having mainly the shape of a cylindrical ring. The body 411 as well as the gasket 414 are provided with a slot 431, wherein the sleeve 427 of the selector member 420 is movable between the measuring and closed positions in a plane perpendicular to the central axis 441 of the measuring and closing portion 425 of cylindrical shape. The body 411 as well as the gasket 414 are provided with an aperture 415, through which the measuring instrument disposed in the hole 426 and 426a of the selector member is in connection with the process in measuring position.

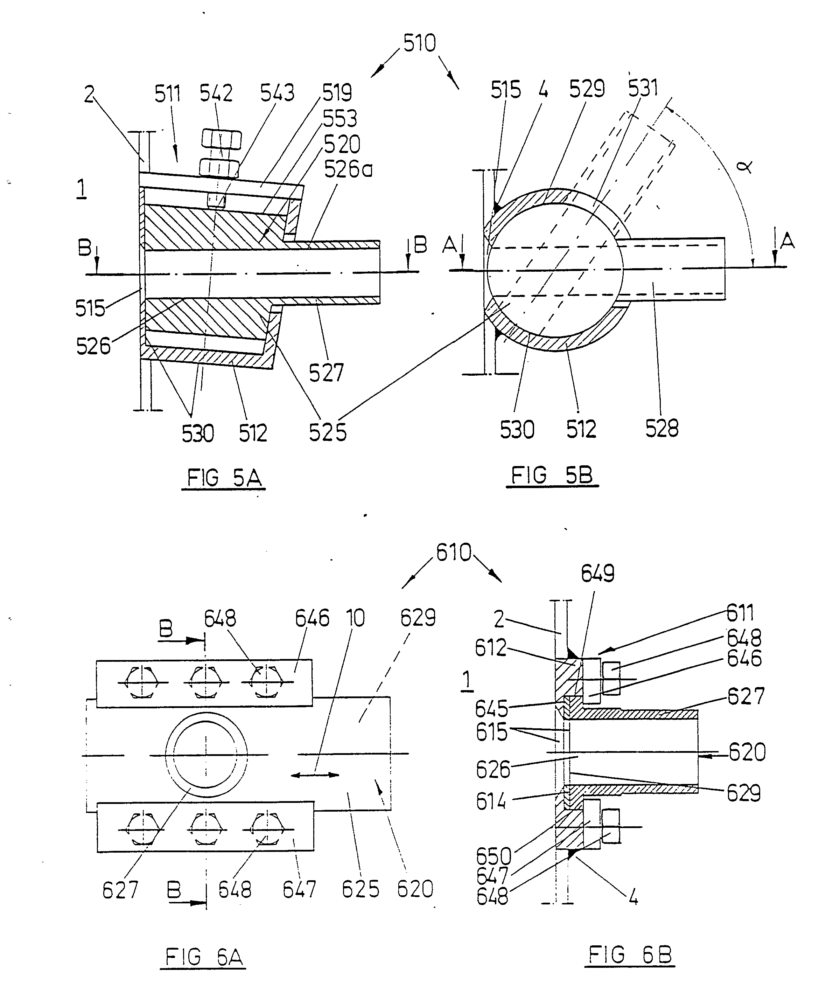

The Figures 5a and 5b show a fifth embodiment of the connecting device according to the invention without the measuring instrument. Fig. 5a is a sectional view as taken on line A-A of Fig. 5b and Fig. 5b respectively a sectional view as taken on line B-B of Fig. 5a. In this embodiment the surface 529 of the measuring and closing portion 525 of the selector member 520 has the shape of a truncated cone, the housing 530 in the base portion 512 of the body 511 therefore having similar conical shape. The portion 525 is disposed into the housing 530 so, that the central axes of these conical shapes coincide with each other. When the connecting device according to Figs. 5a and 5b is mounted in such a manner, that the rotatory movement between the measuring and closed positions is performed in a horizontal plane, a very favourable sealing effect exists between the housing 530 of the body 511 and the portion 525, since the portion 525, influenced by the force of gravity, is pressed against the inner surface of the housing. In this case, omission of the gaskets presented in connection with the preceding embodiments can be considered. The closure 519 of the body 511 has a locking screw 542 extending through the closure 519. The end surface 543 of the screw 542 and the upper surface 553 of the portion 525 are pressed against each other when the selector member is in the measuring or closed position. Accidental changes of position are thus prevented. The base portion 512 of the body can be made e. g. by turning from stainless steel and it is equipped with an aperture 515 for the measuring instrument and a slot 531 for the rotatory movement of the selector member.

The Figs. 6a and 6b show a sixth embodiment of the connecting device according to the invention. Fig. 6a is a top view of the embodiment and Fig. 6b is a sectional view as taken on line B-B of Fig. 6a. The base portion 612 of the body 611 comprises a longitudinally extending recess 645. Slabs 646 and 647 are attached to the both edges of the recess e. g. by screws 648. The slabs extend partially over the recess. Grooves 649 and 650 are thus formed on the edges of the recess. The selector member is in this case a plate movable along the grooves 649 and 650 and supported at its edges therein. The plate is provided with a hole 626, at which further is mounted a sleeve 627 for fixing the sensor. Interposed between the selector member 620 and the recess 645 of the body is a gasket 614. The said gasket 614, likewise the body 611, has an aperture 615, through which the measuring instrument gets into connection with the process 1 in the position shown in Fig. 6b. The selector member 620 is movable between the grooves 649 and 650 in the direction of arrow 10 from the measuring position into the closed position and vice versa. When the selector member is in the other extreme position of its movement following a straight line path, the inner surface 629, illustrated by Fig. 6a and acting as a closing surface on the selector member 620, is at the aperture 615 of the body 611.

The Figs. 7a and 7b show an alternative embodiment, which employs an essentially platelike selector member. This seventh embodiment is shown as a top view in Fig. 7a and Fig. 7b in turn shows a sectional view as taken on line B-B of Fig. 7a. The base portion 712 of the body 711 is provided with a circular recess 745 surrounded by an annular ring 746 fastened with bolts 748 to the base portion. The internal diameter of this annular ring is smaller than that of the recess. As a result of this fact an annular groove 749 is formed in the body. This groove is arranged to engage the edge of the essentially platelike selector member 720. The groove simultaneously acts as a guide for the selector member. Further the body 711 is equipped with an aperture 715 positioned excentrically of the centre of the circular groove 745 and further the selector member 720 as well as the gasket 714 are equipped with a hole 726 so that the aperture 715 in the body and the hole 726 in the selector member are at least partially in coincidence with each other in the measuring position. For fixing the measuring instrument, the selector member 720 is equipped with a fixing sleeve 727, as described in the preceding embodiments. The central axis of the sleeve is substantially perpendicular to the main plane of the platelike selector member 720 and disposed to coincide with the hole 726. The body 711 is further provided with an annular groove for a gasket 714. From the measuring position shown in Fig. 7a the connecting device can be brought into the closed position by rotating the selector member in the annular groove 749 about the central axis 752 according to arrow 11. The inner surface 729 acting as a closing surface on the selector member 720 will thus, as the rotatory movement continues, move at the aperture 715 of the body 711 closing the connection between the process 1 and the measuring instrument. In the embodiment shown by Figs. 6a and 6b and Figs. 7a and 7b the thickness of the plate material in the selector members 620 and 720 can be selected with regard to the grooves 649 and 749 so that the final tightening of the fastening bolts 648 and 748 of the slabs 646 and 647 and the annular ring 746 locks the selector member in relation to the body.

The Figs. 1 and 3 show further the disposing of a sealing member, such as a packing ring 12 between the measuring instrument 3 and the hole 126, 326 of the selector member.

The accompanying Figs. 1-7 illustrate embodiments, wherein the body of the connecting device is affixed to the boundary surface of the process at 4 by welding. However, also other alternatives are apparent for a man skilled in the art, such as fixing with bolts etc.

The shifting between the measuring and closed positions can be performed by gripping the measuring instrument and/or the sleeve portion, when separate lever is not mounted.

Figs. 8-10 show schematically some embodiments in mounting the measuring instrument in the selector member. By employing these embodiments the measuring instrument can be brought partially into the process substance, when the connecting device is in the measuring position. This is due to the possibility of moving the measuring instrument in the longitudinal direction of the hole of the selector member back and forth. In particular when the measuring instrument is entirely within the hole of the selector member, the connecting device can be brought into the closed position. The measuring instrument can be brought into the process substance by moving it in the longitudinal direction of the hole of the selector member past the front part of the selector member and past the base portion of the body. Before the connecting device is brought into the closed position, the sensor must naturally be moved completely back into the hole of the selector member. Figs. 8-10 show this mode substantially applied to the embodiment of the selector member illustrated by Fig.1.

Fig. 8 is a sectional view of the selector member in corporating the sleeve portion 127 having a hole 126a with an internal threading 151 therein. An external sleeve 152 with an external threading 153 is fixed on the sensor 3. The threading 153 fits within the internal threading 151 of the sleeve portion 127. By rotating the sensor at the sleeve 152 mounted thereon the sensor can be moved in the longitudinal direction of the hole 126 of the selector member towards the process 1 until the end surface 155 of the sleeve 152 on the sensor reaches the bottom 154 of the hole 126a in the sleeve portion 127. The front part of the sensor 3 is in this position in the process substance. An external locking nut is disposed to the sleeve 152. By means of this nut the position of the sensor is locked by bringing the nut into contact with the end surface 157 of the sleeve portion 127. The sensor 3 has also an annular groove 13 for a packing ring 12 acting as a sealing member between the hole 126 and the sensor.

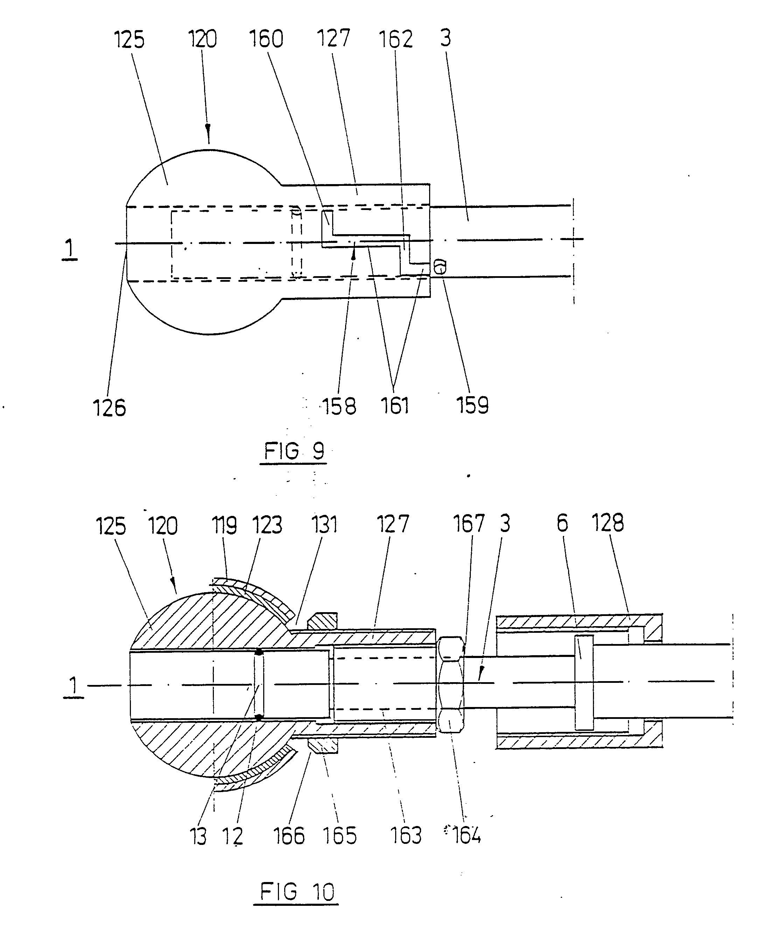

Fig. 9 shows an embodiment, where the sleeve portion 127 of the selector member 120 is equipped with a guiding slot 158 and the outer surface of the sensor is correspondingly equipped with a guiding pin fitting within the slot. The slot 158 comprises in this embodiment two portions 160 and 162 directed transversally to the longitudinal direction of the hole of the sleeve portion 127. When the guiding pin is in one or the other of these slots, the sensor is rotated. Further the slot 158 comprise two portions 161 parallel to the longitudinal direction of the hole of the sleeve portion 127. When the guiding pin is in one or the other of these slots, the sensor can be moved in the longitudinal direction of the selector member. The parts 159 and 160 thus define the position of the sensor in the longitudinal direction of the hole in the selector member.

Fig. 10 shows further an embodiment, where the sleeve portion 127 is provided with an internal threading. A sleeve 163 having an external threading fitting within said internal threading is rotatable in the sleeve portion 127 and is thus movable along the longitudinal direction thereof. The sleeve 163 is further equipped with a rotating nut 164. When the sleeve 163 is rotated in the sleeve portion 127 of the selector member 120, the final longitudinal position of the sensor 3, where the flange 6 on the sensor contacts the end surface 167 of the rotating nut, is defined by the position of the end surface 167 of the rotating nut. The sensor is locked to the connecting device with a barrel nut 128 by locking its flange 6 between the bottom of the barrel nut 128 and the end surface 167 of the rotating nut 164. The barrel nut is provided with an internal threading, the sleeve portion 127 of the selector member 120 being provided with an external threading fitting therein. Fig. 10 shows further a locking nut 165 chamfered at its edge, as denoted at 166, to fit within the slot 131 of the connecting device. By means of the nut 165 the selector member 120 can be locked to its position by tightening the nut into the slot 131 after the position of the selector member has been changed. The chamfered edge 166 contacts thus the edges of the slot 131 consisting of edges of the closure 119 and the gasket 123.

## Claims

1. Connecting device for measuring instruments including a body (111, 211, 311, 411, 511, 611, 711) attached to a boundary surface (2) of a process (1), the body comprising an aperture or the like (115, 215, 315, 415, 515, 615, 715) in connection with the process (1), through which aperture the process is measured by a measuring instrument (3) affixed to the connecting device, characterized in that the measuring instrument (3) is affixed to a selector member (120, 220, 320, 420, 520, 620, 720) mounted movably relative to the body (111, 211, 311, 411, 511, 611, 711), that the selector member has a hole or the like (126, 226, 326, 426, 526, 626, 726) in connection with the measuring instrument, which hole is in connection with the aperture (115, 215, 315, 415, 515, 615, 715) of the body in the measuring position of the connecting device and that the selector member has a closing surface or the like (129, 229, 329, 429, 529, 629, 729) being at the aperture of the body in the closed position of the connecting device.

2. Connecting device according to claim 1, characterized in that the closing surface (129, 229, 329, 429, 529) of the selector member (120, 220, 320, 420, 520) is an arcuate surface, such as a spherical surface (129, 329), a surface of revolution (229), a cylindrical surface (429) or a conical surface (529), that a gasket (114, 214, 314, 414) and/or the inner surface (514) of the body coacting with the closing surface has a corresponding shape at least in its portion contacting the closing surface, the measuring instrument (3) being movable between the measuring and closed positions so that an angle ($\alpha$) exists between the longitudinal directions of the hole or the like (126, 226, 326, 426, 526) of the selector member in the measuring and closed positions.

3. Connecting device according to claim 1, characterized in that the closing surface of the selector member (620, 720) is a planar surface (629, 729), the measuring instrument (3) being movable between the measuring and closed positions so that the longitudinal direction of the hole (626, 726) or the like of the selector member (620, 720) substantially remains the same between measuring and closed positions.

4. Connecting device according to claim 3, characterized in that the movement follows a straight line path and that the body (611) is provided with straight guiding grooves (649, 650) adapted to act as guides for a substantially platelike selector member (620) at its opposite edges.

5. Connecting device according to claim 3, characterized in that the movement is rotatory and that the body (711) is provided with a guiding groove (749) of annular shape adapted to act as a guide for a substantially platelike selector member (720) of circular shape at its edge.

6. Connecting device according to one of claims 3 to 5, characterized in that the substantially platelike selector member (620, 720) is provided with a sleeve (627, 727) or the like for fixing the measuring instrument, which is in connection with the aperture (615, 715) of the body (611, 711) through the hole (626, 726) of said sleeve in the measuring position.

7. Connecting device according to one of claims 1 and 2, characterized in that a measuring and closing portion (125, 325, 425, 525) incorporated in the selector member (120, 320, 420, 520) has the shape of a sphere, a cylinder or a truncated cone, the measuring instrument (3) being at least partially disposed into a hole or the like (126, 326, 426, 526) arranged in said measuring and closing portion.

8. Connecting device according to one of claims 2 and 7, characterized in that the body (111, 311, 411, 511) comprises a housing (130, 330, 430, 530) surrounding substantially the measuring and closing portion, which housing has the shape corresponding substantially to the shape of the outer surface of the measuring and closing portion, the body being provided with a slot (131, 331, 431, 531) for allowing a rotatory movement ($\alpha$) of the selector member.

9. Connecting device according to one of claims 7 and 8, characterized in that a sleeve portion (127, 427, 527) or the like is affixed to the measuring and closing portion (125, 425, 525), the hole of said sleeve portion being in connection with the hole (126, 426, 526) of the measuring and closing portion, said sleeve portion being adapted to move in the longitudinal direction of the slot (131, 431, 531) and being provided with members for fixing the measuring instrument (3) in the selector member.

10. Connecting device according to one of claims 1 and 2, characterized in that the measuring and closing portion (225) is a shell structure provided with an arcuate closing surface (229), a sleeve (227) or the like for fixing the measuring instrument (3) being attached to said shell structure, the hole (226) of the sleeve (227) being in connection with the aperture (215) of the body (211) in the measuring position.

11. Connecting device according to claim 1, characterized in that the selector member (220, 320) is journaled in the body (211, 311) with at least one pivot (236, 237, 336), a lever (238, 338) being affixed to the pivot (236, 336) for rotating the measuring and closing portion (225, 325) in a plane perpendicular to the central axis of the pivot (236, 237, 336).

12. Connecting device according to claim 1, characterized in that a gasket (114, 24, 314, 414, 616, 714) such as a polytetrafluoroethylene gasket is interposed between the selector member (120, 220, 320, 420, 520, 620, 720) and the body (111, 211, 311, 411, 611, 711) or at least the base portion (112, 212, 312, 412, 512, 612, 712) thereof.

13. Connecting device according to claim 1, characterized in that moving means is arranged in the hole (126, 226, 326, 426, 526, 626, 726) of the selector member (120, 220, 320, 420, 520, 620, 720), which means allows the measuring instrument (3) to be moved in the longitudinal direction of the hole (126, 226, 326, 426, 526, 626, 726) especially for moving the measuring instrument into the process (1) in the measuring position of the connecting device and into the selector member in order to bring the connecting device into the closed position.

14. Connecting device according to claim 13, characterized in that a threading (151) is arranged in the hole (126) of the selector member (120), that the outer surface of the measuring instrument (3) comprises a correspondingly dimensioned external threading (153), the measuring instrument (3) thus being partially rotatable in the hole of the selector member (120) into the process.

15. Connecting device according to claim 13, characterized in that a slot (158) is arranged in the sleeve portion of the selector member (120) and that on the outer surface of the measuring instrument (3) is a guiding pin (159) fitting within the slot (158) disposed at least partially in the longitudinal direction (161) of the sleeve portion for bringing the measuring instrument into the process (1) by means of the guiding effect accomplished by the slot (158) and the guiding pin (159).

16. Connecting device according to claim 13, characterized in that in the hole (126) of the selector member (120) is arranged a threading and that a correspondingly threaded sleeve (163) is disposed in the hole of the selector member, the end surface (167) of the sleeve (163) coacting with a stop member, such as a flange (6), on the measuring instrument (3) in order to define the position of the measuring instrument (3), said flange (6) thereby contacting the end surface (167) of the sleeve.

17. Connecting device according to one of claims 1 to 16, characterized in that between the measuring instrument (3) and the hole (126, 226, 326, 426, 526, 626, 726) of the selector member (120, 220, 320, 420, 520, 620, 720) is interposed a packing (12), especially a packing ring.

18. Connecting device according to claim 1, characterized in that a bore (168) is arranged in the body (111), said bore extending through the body and connecting a space (169) or the like within the housing (130) of the body (111) with the surface of the body outside the boundary surface of the process, the space (169) being arranged to be in connection with the measuring instrument (3) in the closed position.

**Patentansprüche**

1. Verbindungsvorrichtung für Meßinstrumente, bei welcher ein Körper (111, 211, 311, 411, 511, 611, 711) an der Grenzfläche (2) eines Prozesses (1) angeordnet ist, der eine mit dem Prozeß in Verbindung stehende Öffnung (115, 215, 315, 415, 515, 615, 715) oder dergleichen aufweist, und bei welcher durch diese Öffnung der Prozeß mittels eines Meßinstrumentes (3) gemessen wird, das an der Verbindungsvorrichtung angebracht ist, dadurch gekennzeichnet, daß das Meßinstrument (3) an einem Auswahlglied (120, 220, 320, 420, 520, 620, 720) befestigt ist, welches relativ zum Körper (111, 211, 311, 411, 511, 611, 711) beweglich gelagert ist, daß das Auswahlglied eine mit dem Meßinstrument verbundene Öffnung (126, 226, 326, 426, 526, 626, 726) oder dergleichen aufweist, die in der Meßstellung der Verbindungsvorrichtung mit der Öffnung (115, 215, 315, 415, 515, 615, 715) des Körpers in Verbindung steht, und daß das Auswahlglied eine Schließfläche (129, 229, 329, 429, 529, 629, 729) oder dergleichen aufweist, die sich in der geschlossenen Stellung der Verbindungsvorrichtung vor der Öffnung des Körpers befindet.

2. Verbindungsvorrichtung nach Anspruch 1, dadurch gekennzeichnet, daß die Schließfläche (129, 229, 329, 429, 529) des Auswahlgliedes (120, 220, 320, 420, 520) von einer kreisförmigen Fläche, wie zum Beispiel einer sphärischen Fläche (129, 329), einer Rotationsfläche (229), einer Zylinderfläche (429) oder einer konischen Fläche (529) gebildet wird, daß eine Dichtung (114, 214, 314, 414) und/oder die innere Oberfläche (514) des mit der Schließfläche zusammenarbeitenden Körpers zumindest an der mit der Schließfläche in Berührung stehenden Stelle eine entsprechende Form aufweist, wobei das Meßinstrument (3) zwischen der Meßstellung und der geschlossenen Stellung in der Weise beweglich ist, daß ein Winkel (α) entsteht zwischen den Längsrichtungen der Öffnung (126, 226, 326, 426, 526) oder dergleichen des Auswahlgliedes in dessen Meß- und Schließstellung.

3. Verbindungsvorrichtung nach Anspruch 1, dadurch gekennzeichnet, daß die Schließfläche des Auswahlgliedes (620, 720) von einer Planfläche (629, 729) gebildet wird, wobei das Meßinstrument (3) so zwischen seiner Meß- und Schließstellung beweglich ist, daß die Längsrichtung der Öffnung (626, 726) oder dergleichen des Auswahlgliedes (620, 720) in der Meß- und Schließstellung im wesentlichen gleich bleibt.

4. Verbindungsvorrichtung nach Anspruch 3, dadurch gekennzeichnet, daß die Bewegung in gerader Richtung erfolgt, und daß der Körper (611) mit geraden Führungsnuten (649, 650) ausgestattet ist, die als an entgegengesetzten Kanten angeordnete Fuhrungen für ein im wesentlichen ebenes Auswahlglied (620) dienen.

5. Verbindungsvorrichtung nach Anspruch 3, dadurch gekennzeichnet, daß die Bewegung kreisförmig ist, und daß der Körper (711) mit einer ringförmigen Führungsnute (749) ausgestattet ist, die als an der Außenkante angeordnete Führung für ein im wesentlichen ebenes Auswahlglied (720) von kreisförmiger Form dient.

6. Verbindungsvorrichtung nach einem der Ansprüche 3 bis 5, dadurch gekennzeichnet, daß das im wesentlichen ebene Auswahlglied (620, 720) mit einem Flansch (627, 727) oder dergleichen zur Befestigung des Meßinstrumentes ausgestattet ist, der in der Meßstellung durch die Öffnung (626, 726) des besagten Flansches mit der Öffnung (615, 715) des Körpers (611, 711) in Verbindung steht.

7. Verbindungsvorrichtung nach Anspruch 1 oder 2, dadurch gekennzeichnet, daß ein im Auswahlglied (120, 320, 420, 520) enthaltener Meß- und Schließteil (125, 325, 425, 525) die Form einer Kugel, eines Zylinders oder eines stumpfen Konus hat, wobei das Meßinstrument (3) zumindest teilweise in einer an dem Meß- und Schließteil ausgebildeten Öffnung (126, 326, 426, 526) oder dergleichen angeordnet ist.

8. Verbindungsvorrichtung nach Anspruch 2 oder 7, dadurch gekennzeichnet, daß der Körper (111, 311, 411, 511) ein Gehäuse (130, 330, 430, 530) umfaßt, welches das Meß- und Schließteil im wesentlichen umgibt und eine im wesentlichen der Form der äußeren Oberfläche des Meß- und Schließteiles entsprechende Form hat, und daß der Körper mit einem Schlitz (131, 331, 431, 531) ausgestattet ist, welcher eine Drehbewegung (α) des Auswahlgliedes erlaubt.

9. Verbindungsvorrichtung nach Anspruch 7 oder 8, dadurch gekennzeichnet, daß ein Flanschteil (127, 427, 527) oder dergleichen am Meß- und Schließteil (125, 425, 525) befestigt ist, und daß die Öffnung des besagten Flanschteiles mit der Öffnung (126, 426, 526) des Meß- und Schließteiles in Verbindung steht, wobei der Flanschteil in Längsrichtung des Schlitzes (131, 431, 531) beweglich und mit Organen ausgestattet ist, um das Meßinstrument (3) am Auswahlglied zu befestigen.

10. Verbindungsvorrichtung nach Anspruch 1 oder 2, dadurch gekennzeichnet, daß das Meß- und Schließteil (225) von einer mit einer kreisförmigen Schließfläche (229) versehenen Schalenstruktur gebildet wird, wobei ein Flansch (227) oder dergleichen zur Befestigung des Meßinstrumentes (3) an der Schalenstruktur verbunden ist, und wobei die Öffnung (226) des Flansches (227) in der Meßstellung mit der Öffnung (215) des Körpers (211) in Verbindung steht.

11. Verbindungsvorrichtung nach Anspruch 1, dadurch gekennzeichnet, daß das Auswahlgied (220, 320) mittels mindestens eines Lagerbolzens (236, 237, 336) im Körper (211, 311) drehbar gelagert ist, und daß ein Hebel (238, 338) an dem Lagerbolzen (236, 336) befestigt ist, um das Meß- und Schließteil (225, 325) in einer zur Mittelachse des Lagerbolzens (236, 237, 336) senkrechten Ebene zu bewegen.

12. Verbindungsvorrichtung nach Anspruch 1, dadurch gekennzeichnet, daß eine Dichtung (114, 214, 314, 414, 614, 714), wie zum Beispiel eine Polytetrafluorethylen-Dichtung, zwischen dem Auswahlglied (120, 220, 320, 420, 520, 620, 720) und dem Körper (111, 211, 311, 411, 611, 711) oder zumindest einem unteren Teil (112, 212, 312, 412, 512, 612, 712) davon angeordnet ist.

13. Verbindungsvorrichtung nach Anspruch 1, dadurch gekennzeichnet, daß Bewegungsmittel in der Öffnung (126, 226, 326, 426, 526, 626, 726) des Auswahlgliedes (120, 220, 320, 420, 520, 620, 720) angeordnet sind, um das Meßinstrument (3) in Längsrichtung der Öffnung (126, 226, 326, 426, 526, 626, 726) bewegen zu können, insbesondere um das Meßinstrument in der Meßstellung der Verbindungsvorrichtung in den Prozeß (1) zu bewegen und um es in das Auswahlglied zu bewegen, um die Verbindungsvorrichtung in ihre geschlossene Stellung zu überführen.

14. Verbindungsvorrichtung nach Anspruch 13, dadurch gekennzeichnet, daß in der Öffnung (126) des Auswahlgliedes (120) ein Gewinde (151) angebracht ist, und daß die Außenfläche des Meßinstrumentes (3) ein entsprechend dimensioniertes Außengewinde (153) aufweist, so daß das Meßinstrument (3) in der Öffnung des Auswahlgliedes (120) teilweise in den Prozeß drehbar ist.

15. Verbindungsvorrichtung nach Anspruch 13, dadurch gekennzeichnet, daß in dem Flanschteil des Auswahlgliedes (120) ein Schlitz (158) ausgebildet ist, und daß am äußeren Umfang des Meßinstrumentes (3) ein Führungsstift (159) angeordnet ist, der in den zumindest teilweise in Längsrichtung (161) des Flanschteiles verlaufenden Schlitz (158) eingreift, um das Meßinstrument mit Hilfe von dem Schlitz (158) und dem Führungsstift (159) hervorgerufenen Führungseffektes in den Prozeß (1) einzuführen.

16. Verbindungsvorrichtung nach Anspruch 13, dadurch gekennzeichnet, daß in der Öffnung (126) des Auswahlgliedes (120) ein Gewinde angebracht ist, und daß ein mit einem entsprechenden Gewinde versehener Flansch (163) in der Öffnung des Auswahlgliedes angeordnet ist, wobei die Endfläche (167) des Flansches (163) mit einem Anschlag, wie zum Beispiel einem Bund (6), des Meßinstrumentes (3) zusammenwirkt, um die Stellung des Meßinstrumentes (3) festzulegen, wobei der besagte Bund (6) mit der Endfläche (167) des Flansches in Eingriff kommt.

17. Verbindungsvorrichtung nach einem der Ansprüche 1 bis 16, dadurch gekennzeichnet, daß zwischen dem Meßinstrument (3) und der Öffnung (126, 226, 326, 426, 526, 626, 726) des Auswahlgliedes (120, 220, 320, 420, 520, 620, 720) eine Dichtung (12), vorzugsweise ein Dichtungsring, eingefügt ist.

18. Verbindungsvorrichtung nach Anspruch 1, dadurch gekennzeichnet, daß in dem Körper (111) eine Bohrung (168) angeordnet ist, die sich durch den Körper erstreckt und einen innerhalb des Gehäuses (130) des Körpers (111) befindlichen Raum (169) oder dergleichen mit der außerhalb der Grenzfläche des Prozesses befindlichen Oberfläche des Körpers verbindet, wobei der Raum (169) so angeordnet ist, daß er in der Schließstellung mit dem Meßinstrument (3) in Verbindung steht.

**Revendications**

1. Monture pour instruments de mesure, comprenant un corps (111, 211, 311, 411, 511, 611 711) qui se fixe à une paroi (2) limitant un volume siège d'un traitement (1) (ou paroi limite du traitement), le corps présentant une ouverture ou équivalent (115, 215, 315, 415, 515, 615, 715) qui est en communication avec le traitement (1) et à travers laquelle le traitement est mesuré au moyen d'un instrument de mesure (3) fixé à la monture, caractérisée en ce que l'instrument de mesure (3) est fixé à un organe sélecteur (120, 220, 320, 420, 520, 620, 720) monté mobile par rapport au corps (111, 211, 311, 411, 511, 611, 711), en ce que l'organe sélecteur présente une lumière ou équivalent (126, 226, 326, 426, 526, 626, 726) qui reçoit l'instrument de mesure, laquelle lumière est en communication avec l'ouverture (115, 215, 315, 415, 515, 615, 715) du corps dans la position de mesure de la monture, et en ce que l'organe sélecteur présente une surface obturatrice ou équivalent (129, 229, 329, 429, 529, 629, 729) qui se trouve au droit de l'ouverture du corps dans la position fermée de la monture.

2. Monture selon la revendication 1, caractérisée en ce que la surface obturatrice (129, 229, 329, 429, 529) de l'organe sélecteur (120, 220, 320, 420, 520) est une surface courbe, par exemple une surface sphérique (129, 329), une surface de révolution (229), une surface cylindrique (429) ou une surface conique (529), en ce qu'une garniture d'étanchéité (114, 214, 314, 414) et/ou la surface interne (514) du corps qui coopère avec la surface obturatrice présentent une forme correspondante, au moins dans leur portion qui entre en contact avec la surface obturatrice, l'instrument de mesure (3) pouvant être déplacé entre la position de mesure et la position fermée de telle manière qu'il se forme un angle (α) entre les directions longitudinales que la lumière ou équivalent (126, 226, 326, 426, 526) de l'organe sélecteur prend dans la position de mesure et dans la position fermée.

3. Monture selon la revendication 1, caractérisée en ce que la surface obturatrice de l'organe sélecteur (620, 720) est une surface plane (629, 729), l'instrument de mesure (3) pouvant se déplacer entre la position de mesure et la position fermée par un mouvement tel que la direction longitudinale de la lumière (626, 726) ou équivalent de l'organe sélecteur (620, 720) reste sensiblement la même entre la position de mesure et la position fermée.

4. Monture selon la revendication 3, caractérisée en ce que le mouvement suit une trajectoire rectiligne et en ce que le corps (611) est muni de rainures de guidage rectilignes (649, 650) adaptées pour jouer le rôle de guides pour l'organe sélecteur (620), lequel présente sensiblement la forme d'une plaque, le long des bords opposés de cet organe.

5. Monture selon la revendication 3, caractérisée en ce que le mouvement est un mouvement de rotation et en ce que le corps (711) est muni d'une rainure de guidage (749) de forme annulaire adaptée pour jouer le rôle d'un guide pour un organe sélecteur (720) en forme de plaque, qui présente une forme circulaire le long de son bord.

6. Monture selon une des revendications 3 à 5, caractérisée en ce que l'organe sélecteur sensiblement en forme de plaque (620, 720) est muni d'un manchon (627, 727) ou équivalent servant à la fixation de l'instrument de mesure, lequel est en communication avec l'ouverture (615, 715) du corps (611, 711) à travers la lumière (626, 726) dudit manchon dans la position de mesure.

7. Monture selon une des revendications 1 et 2, caractérisée en ce qu'une portion de mesure et obturatrice (125, 325, 425, 525) incorporée dans l'organe sélecteur (120, 320, 420, 520) possède la forme d'une sphère, d'un cylindre ou d'un tronc de cône, l'instrument de mesure (3) étant au moins partiellement disposé dans une lumière ou équivalent (126, 326, 426, 526) ménagée dans ladite portion de mesure et obturatrice.

8. Monture selon une des revendications 2 et 7, caractérisée en ce que le corps (111, 311, 411, 511) comprend un logement (130, 330, 430, 530) qui entoure sensiblement la portion de mesure et obturatrice, lequel logement possède une forme qui correspond sensiblement à la forme de la surface externe de la portion de mesure et obturatrice, le corps étant muni d'une fente (131, 331, 431, 531) destinée à permettre un mouvement de rotation (α) de l'organe sélecteur.

9. Monture selon une des revendications 7 et 8, caractérisée en ce qu'une portion manchon (127, 427, 527) ou équivalent est fixée à la portion de mesure et obturatrice (125, 425, 525), la lumière de la portion manchon étant en communication avec la lumière (126, 426, 526) de la portion de mesure et obturatrice, la portion manchon étant adaptée pour se déplacer dans la direction longitudinale de la fente (131, 431, 531) et étant munie d'éléments permettant de fixer l'instrument de mesure (3) dans l'organe sélecteur.

10. Monture selon une des revendications 1 et 2, caractérisée en ce que la portion de mesure et obturatrice (225) est une structure de coquille munie d'une surface obturatrice courbe (229), un manchon (227) ou équivalent, qui sert à fixer l'instrument de mesure (3) étant fixé à ladite structure de coquille, la lumière (226) du manchon (227) étant en communication avec l'ouverture (215) du corps (211) dans la position de mesure.

11. Monture selon la revendication 1, caractérisée en ce que l'organe sélecteur (220, 320) est tourillonné dans le corps (211, 311) par au moins un tourillon (236, 237, 336), un levier (238, 338) étant fixé au tourillon (236, 336) pour permettre de faire tourner la portion de mesure et obturatrice (225, 325) dans un plan perpendiculaire à l'axe central du tourillon (236, 237, 336).

12. Monture selon la revendication 1, caractérisée en ce qu'une garniture d'étanchéité (114, 24, 314, 414, 614, 714), par exemple une garniture d'étanchéité en polytétrafluoréthylène, est interposée entre l'organe sélecteur (120, 220, 320, 420, 520, 620, 720) et le corps (111, 211, 311, 411, 511, 611, 711), ou au moins la portion de base (112, 212, 312, 412, 512, 612, 712) de ce corps.

13. Monture selon la revendication 1, caractérisée en ce qu'un moyen de déplacement est disposé dans la lumière (126, 226, 326, 426, 526, 626, 726) de l'organe sélecteur (120, 220, 320, 420, 520, 620, 720), ce moyen permettant de déplacer l'instrument de mesure (3) dans la direction longitudinale de la lumière (126, 226, 326, 426, 526, 626, 726), en particulier pour introduire l'instrument de mesure dans le traitememt (1) dans la position de mesure de la monture et pour le rétracter dans l'organe sélecteur afin de permettre de placer la monture dans la position fermée.

14. Monture selon la revendication 13, caractérisée en ce qu'un filetage (151) est ménagé dans la lumière (126) de l'organe sélecteur (120), en ce que la surface externe de l'instrument de mesure (3) comprend un filetage extérieur (153) de dimension correspondante, l'instrument de mesure (3) pouvant ainsi être introduit partiellement dans le traitement par une rotation dans la lumière de l'organe sélecteur (120).

15. Monture selon la revendication 13, caractérisée en ce qu'une fente (158) est ménagée dans la portion manchon de l'organe sélecteur (120) et en ce que, sur la surface externe de l'instrument de mesure (3), se trouve un ergot de guidage (159) qui s'engage dans la fente (158), qui est disposée au moins partiellement dans la direction longitudinale (161) de la portion manchon pour introduire l'instrument de mesure dans le traitememt (1) au moyen de l'effet de guidage assuré par la fente (158) et par l'ergot de guidage (159).

16. Monture selon la revendication 13, caractérisée en ce que, dans la lumière (126) de l'organe sélecteur (120) est ménagé un filetage et en ce qu'un manchon (126) muni d'un filetage correspondant est disposé dans la lumière de l'organe sélecteur, la surface d'extrémité (167) du manchon (163) coopérant avec une butée, par exemple une collerette (6) prévue sur l'instrument de mesure (3), pour définir la position de l'instrument de mesure (3), ladite collerette (6) entrant alors en contact avec la surface d'extrémité (167) du manchon.

17. Monture selon une des revendications 1 à 16, caractérisée en ce que, entre l'instrument de mesure (3) et la lumière (126, 226, 326, 426, 526, 626, 726) de l'organe sélecteur (120, 220, 320, 420, 520, 620, 720), est interposé un élément d'étanchéité (12), en particulier, une bague d'étanchéité.

18. Monture selon la revendication 1, caractérisée en ce qu'un perçage (168) est ménagé dans le corps (111), ce perçage traversant le corps et reliant une chambre (169) ou équivalent située dans le logement (130) du corps (111) à la surface du corps en un point situé à l'extérieur de la paroi limite du traitement, la chambre (169) étant disposée pour être en communication avec l'instrument de mesure (3) dans la position fermée.

FIG 1

FIG 2A

FIG 2B

**0 197 077**

FIG 3

FIG 4A

FIG 4B

2

FIG 5A

FIG 5B

FIG 6A

FIG 6B

FIG 7A

FIG 7B

FIG 8

125  120  160  127  162  3

1

126  158  161  159

FIG 9

125  120  119  123  131  127  167  3  6  128

1

13  12  166  165  163  164

FIG 10